# EUROPEAN PATENT APPLICATION

(11) **EP 4 759 641 A1**
(43) Date of publication of application: **17.06.2026**
(21) Application number: 25222705.3
(22) Date of filing: 11.12.2025
(51) Int. Cl.: B60R 21/017

(54) **DEPLOYMENT CIRCUIT FOR A PYROTECHNIC DEVICE, RELATED DEPLOYMENT SYSTEM, AND METHOD**

(30) Priority: 16.12.2024 IT 202400028599
(71) Applicant: STMicroelectronics International N.V., 1228 Plan-les-Ouates, Genève (CH)
(72) Inventor: D'ANGELO, Vittorio, 84015 Nocera Superiore (IT); PEDONE, Leonardo, 62012 Civitanova Marche (IT); CANNAVACCIUOLO, Salvatore, 80010 Villaricca (NA) (IT); GIORDANO, Antonio, 20148 Milano (IT); PELLEGRINI, Mauro Jonathan, 20091 Bresso (MI) (IT)
(74) Representative: Buzzi, Notaro & Antonielli d'Oulx S.p.A.

(57) **Abstract**

A deployment circuit (105) for controlling the deployment of a pyrotechnic device (30) is disclosed. The deployment circuit (105) comprises a deployment driver circuit (20) configured to energize the pyrotechnic device (30) by connecting (20a, 20b) respective terminals (PR, PF) to a supply voltage (V_{SUP}), diagnostic circuitry (160) configured to perform diagnostic controls on the deployment circuit (105), a communication interface (SCLK, SDI, SDO, NCS) configured to be connected to a microcontroller (11), a terminal configured to be connected to the microcontroller (11) in order to provide a fault signal (FAULT) to the microcontroller (11) and a control circuit (110).

Specifically, the control circuit (110) comprises a hardware Finite-State Machine configured to execute one or more diagnostic routines (300, 350, 360, 370), wherein each diagnostic routine (300, 350, 360, 370) comprises a sequence of diagnostic operations (301-307; 351-356; 363-364; 374-375). In each diagnostic operation, the control circuit (110) is configured to generate control signals for the diagnostic circuitry (160) in order to execute a respective diagnostic operation of the deployment circuit (105), monitor one or more signals (CS, DS) provided by the diagnostic circuitry (160), and determine whether the one or more signals (CS, DS) indicate one or more faults of the deployment circuit (105). In response to determining that the one or more signals (CS, DS) indicate one or more faults of the deployment circuit (105), the control circuit (110) asserts the fault signal (FAULT) and stores a fault code (ZF) indicative of the fault detected. Moreover, the control circuit (110) is configured to receive via the communication interface (SCLK, SDI, SDO, NCS) a request and, in response to the request, transmit the stored fault code (ZF).

## Description

### Technical field

The present disclosure relates to solutions for deploying an electrically activated pyrotechnic device, such as a squib, a pyro-fuse or a pyro-actuator.

### Technological background

Electrically activated pyrotechnic devices serve as indispensable components for delivering substantial amounts of energy within extremely brief deployment windows and, for this reason, are widespread in safety applications. Notably, this category includes squibs utilized for airbag activation, pyro-fuses designed to swiftly disconnect electrical connections, such as, for example, a connection of an electric vehicle (EV) battery in the event of a short to ground fault, and pyro-actuators.

In the context of safety applications, various solutions have been proposed for monitoring the correct connection of the pyrotechnic device to the deployment circuit. State of the art automotive safety systems for squib or pyro-fuse deployment typically incorporate a microcontroller (MCU) and squib or pyro-fuse driver configuration that performs periodic resistive load diagnostics. The existing technology typically involves continuous MCU monitoring to detect potential deployment failure mechanisms such as, for instance, squib or pyro-fuse failures, or short circuits within the squib or pyro-fuse driver, thus necessitating persistent system operation.

Despite leveraging high-efficiency Power Management Integrated Circuits (PMICs), the constant diagnostic activity results in substantial power consumption. Current implementations strategically manage diagnostic interval timings to mitigate stress on critical semiconductor or passive components, particularly power MOSFETs and energy storage capacitors, balancing comprehensive system integrity assessment with component preservation requirements.

At a system architectural level, contemporary mission-critical applications demand sophisticated diagnostic methodologies ensuring real-time, automated, and highly reliable fault detection. Existing technological approaches consistently employ computationally intensive MCU-based polling strategies, which introduce the significant drawbacks of elevated power consumption, substantial computational overhead, and accelerated component aging mechanisms.

Moreover, current diagnostic solutions integrate internal integrated circuit (IC) resources with external microcontroller (MCU) capabilities to validate resistive load integrity. The diagnostic workflow systematically manages a process wherein the MCU enables IC diagnostic resources, acquires measurement data, computes critical parameters, and compares these against predefined thresholds.

This approach inherently consumes MCU processing bandwidth, diverting computational resources from alternative system tasks and introducing potential operational inefficiencies.

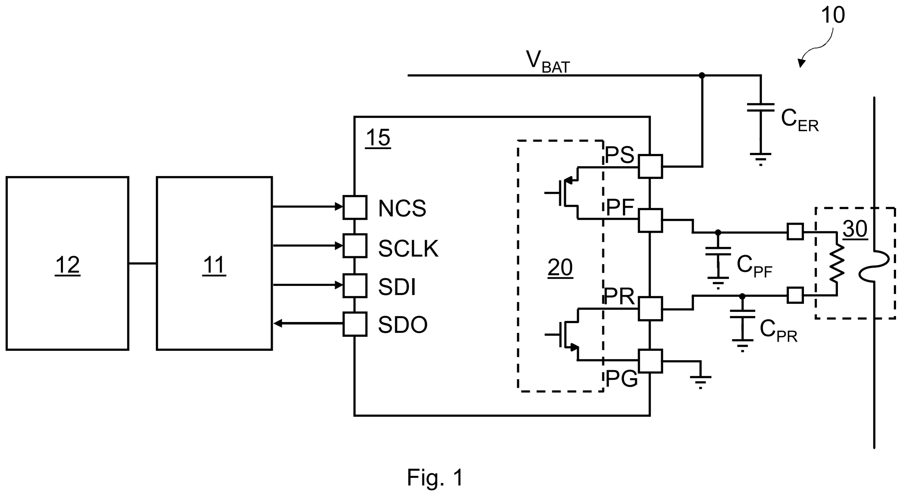

An exemplary embodiment of solutions of this kind is illustrated in Figure 1, wherein a deployment system 10 comprises a squib or pyro-fuse deployment circuit 15, a microcontroller unit 11, a power management circuit 12, and a squib or pyro-fuse 30.

As pictured, the squib or pyro-fuse deployment circuit 15 is coupled to the microcontroller 11 and to the squib or pyro-fuse 30. In particular, in the example considered the microcontroller 11 and the deployment circuit 15 are coupled through a Serial Peripheral Interface (SPI), wherein the microcontroller 11 is configured as a SPI master and the deployment circuit 15 is configured as SPI slave.

In fact, as illustrated, the deployment circuit 15 comprises a first chip-select contact NCS that allows the SPI master device i.e., the microcontroller 11, to select the deployment circuit 15 for exchanging data over the bus, a bus clock contact SCLK that allows the microcontroller 11 to transmit to the deployment circuit 15 a clock signal for syncing the transmission of data over the bus, a serial data input contact SDI used for receiving data from the microcontroller 11, and a serial data output contact SDO used for outputting data to the microcontroller 11.

The squib or pyro-fuse deployment circuit 15 comprises a deployment driver 20, which in turn comprises a high-side switch 20a, and a low-side switch 20b, and is used for coupling the squib or pyro-fuse 30 to a power supply. Specifically, a first terminal of the squib or pyro-fuse 30 is coupled via the high-side driver 20a to a supply voltage V_{BAT}, whereas a second terminal is coupled via the low-side switch 20b to ground. The high-side switch 20a and the low-side switch 20b are typically realized using MOSFETs, BJTs, or IGBTs.

Further, the deployment circuit 15 comprises an energy reserve capacitor C_{ER} used for allowing the deployment circuit 15 to work even in case of loss of energy.

As mentioned, the microcontroller 11 is configured to continuously monitor the resistive load coupled to the deployment circuit 15 i.e., the squib or pyro-fuse 30, in order to detect possible failure points that may prevent a successful deployment in case of necessity. Of course, such monitoring requires that the microcontroller 11 is always active, thus causing a relevant system power consumption, even when supplied by a high-efficiency power management circuit 12.

In view of the above, it is clear that solutions available nowadays based on time aggressive polling strategies which are implemented by a microcontroller unit have the drawback of high computation effort, increased system power consumption and cause increased aging effects on the system electrical components. This is particularly relevant in the context of battery electric vehicles (BEV), which require continuous monitoring of the high-voltage batteries provided therein, even when the vehicle is parked, in order to satisfy the safety requirements.

Therefore, the need is felt for a reliable, automatic and real-time diagnostics in order to comply with ever more stringent safety requirements.

### Object and summary

Given the mission-critical nature of numerous applications in which squibs, pyro-fuses, or pyrotechnic devices are employed, a pressing need exists for innovative solutions that are able to perform required diagnostics while reducing power consumption and preserving the integrity of the electrical components.

According to one or more embodiments, such an object may be achieved by means of a deployment circuit for a pyrotechnic device. Embodiments moreover concern a related deployment system and method.

The invention is defined by the appended independent claims. The claims are an integral part of the technical teaching of the disclosure provided herein.

As mentioned before, various embodiments of the present disclosure relate to a deployment circuit configured to control the deployment of a pyrotechnic device. In various embodiments, the deployment circuit, e.g., integrated in an integrated circuit, comprises a positive power supply terminal and a negative power supply terminal configured to receive a supply voltage, and a first terminal and a second terminal configured to be connected to a pyrotechnic device. A deployment driver circuit is configured to energize the pyrotechnic device by connecting the first terminal and the second terminal to the supply voltage.

In various embodiments, the deployment circuit comprises a diagnostic circuitry configured to perform diagnostic controls on the deployment circuit, a communication interface configured to be connected to a microcontroller, and a terminal configured to be connected to the microcontroller in order to provide a fault signal to the microcontroller. The communication interface may be a serial communication interface, such as a Serial Peripheral Interface (SPI).

In various embodiments, the deployment circuit comprises a control circuit comprising a hardware Finite-State Machine, such as a sequential logic circuit, configured to execute one or more diagnostic routines, wherein each diagnostic routine comprises a sequence of diagnostic operations. Specifically, in each diagnostic operation, the control circuit is configured to generate one or more control signals for the diagnostic circuitry in order to execute a diagnostic operation of the deployment circuit, monitor one or more signals provided by the diagnostic circuitry and determine whether the one or more signals indicate one or more faults of the deployment circuit. In response to determining that the one or more signals indicate one or more faults of the deployment circuit, the control circuit asserts the fault signal and stores a fault code indicative of the fault detected. Accordingly, in response to determining that the fault signal is asserted, the microcontroller may send a request to the deployment circuit in order to receive the stored fault code, i.e., the control circuit is configured to receive via the communication interface a request and, in response to the request, transmit the stored fault code.

In various embodiments, the control circuit comprises a memory for storing first data indicating a repetition period for the execution of at least one of the diagnostic routines, and/or for each diagnostic operation second data indicating after how many cycles of a given diagnostic routine the respective diagnostic operation should be executed. Accordingly, the control circuit may be configured to execute the one or more diagnostic routines and the respective diagnostic operation as a function of the first data and the second data.

In various embodiments, the first data and/or the second data are programmable via the communication interface. For example, in this way, the microcontroller may send a request to the deployment circuit in order to program the first data and/or the second data. Next, the microcontroller may enable the low-power state and, in response to determining that the fault signal is asserted, enable the normal operating state and send the request in order to receive the stored fault code.

Accordingly, the control circuit and diagnostic circuit may execute various diagnostic operations. In the following will be described embodiments of possible diagnostic operations. In this respect the terms "first", "second", "third", etc. are just used in order to distinguish the diagnostic operations and phases, and the terms do not imply a time order or that a higher order operation, e.g., "second", implies that also the lower order operations, e.g., "first", have to be executed. Thus, in general, the various operations and phases may be used in any suitable order and combination.

For example, in various embodiments, the diagnostic circuitry comprises a voltage regulator and current monitor circuit. In various embodiments, the voltage regulator and current monitor circuit comprises a voltage source comprising an output terminal for providing a reference voltage, a switching circuit configured to connect the output terminal of the voltage source to the first terminal and the second terminal as a function of a switching circuit control signal received from the control circuit, and a current monitor configured to provide a signal indicative of the current flowing through the output terminal of the voltage source, wherein the signal is provided to the control circuit.

In this case, a first diagnostic operation may comprise a respective first phase, wherein the control circuit is configured to generate the switching circuit control signal in order to connect the output terminal of the voltage source to the first terminal, monitor the signal indicative of the current flowing through the output terminal of the voltage source and determine whether the signal indicates a current flow between the first terminal and the output terminal of the voltage source. In response to determining that the signal indicates a current flow between the first terminal and the output terminal of the voltage source, the control circuit may assert the fault signal and store a fault code indicative of the leakage condition at the first terminal.

Additionally or alternatively, the first diagnostic operation may comprise a respective second phase, wherein the control circuit is configured to generate the switching circuit control signal in order to connect the output terminal of the voltage source to the second terminal, monitor the signal indicative of the current flowing through the output terminal of the voltage source and determine whether the signal indicates a current flow between the second terminal and the output terminal of the voltage source. In response to determining that the signal indicates a current flow between the second terminal and the output terminal of the voltage source, the control circuit may assert the fault signal and store a fault code indicative of the leakage condition at the second terminal.

In various embodiments, the deployment driver circuit comprises a high-side electronic switch connected between the positive power supply terminal and the first terminal, wherein the high-side electronic switch is closed as a function of a high-side switch control signal received from the control circuit, and a low-side electronic switch connected between the second terminal and the negative power supply terminal, wherein the low-side electronic switch is closed as a function of a low-side switch control signal received from the control circuit.

In this case, a second diagnostic operation may comprise a respective first phase, wherein the control circuit is configured to generate the switching circuit control signal in order to connect the output terminal of the voltage source to the first terminal, generate the high-side switch control signal in order to close the high-side electronic switch, monitor the signal indicative of the current flowing through the output terminal of the voltage source and determine whether the signal indicates a current flow from the first terminal to the output terminal of the voltage source. In response to determining that the signal does not indicate a current flow from the first terminal to the output terminal of the voltage source, the control circuit may assert the fault signal and store a fault code indicative of failure of the high-side electronic switch.

Additionally or alternatively, the second diagnostic operation may comprise a respective second phase, wherein the control circuit is configured to generate the switching circuit control signal in order to connect the output terminal of the voltage source to the second terminal, generate the low-side switch control signal in order to close the low-side electronic switch, monitor the signal indicative of the current flowing through the output terminal of the voltage source and determine whether the signal indicates a current flow from the output terminal of the voltage source to the second terminal. In response to determining that the signal does not indicate a current flow from the output terminal of the voltage source to the second terminal, the control circuit may assert the fault signal and store a fault code indicative of failure of the low-side electronic switch.

In various embodiments, the diagnostic circuitry comprises a first current limiter connected between the positive power supply terminal and the first terminal, wherein the first current limiter is enabled as a function of a first enable signal received from the control circuit, and a second current limiter connected between the second terminal and the negative power supply terminal, wherein the second current limiter is enabled as a function of a second enable signal received from the control circuit.

In this case, when also comprising the voltage regulator and current monitor circuit, a third diagnostic operation may comprise a respective first phase, wherein the control circuit is configured to generate the switching circuit control signal in order to connect the output terminal of the voltage source to the first terminal, generate the first enable signal in order to enable the first current limiter, monitor the signal indicative of the current flowing through the output terminal of the voltage source and determine whether the signal indicates a current flow from the first terminal to the output terminal of the voltage source. In response to determining that the signal does not indicate a current flow from the first terminal to the output terminal of the voltage source, the control circuit may assert the fault signal and store a fault code indicative of failure of the operation of the voltage regulator and current monitor circuit and the first current limiter.

Additionally or alternatively, the third diagnostic operation may comprise a respective second phase, wherein the control circuit is configured to generate the switching circuit control signal in order to connect the output terminal of the voltage source to the second terminal, generate the second enable signal in order to enable the second current limiter, monitor the signal indicative of the current flowing through the output terminal of the voltage source and determine whether the signal indicates a current flow from the output terminal of the voltage source to the second terminal. In response to determining that the signal does not indicate a current flow from the output terminal of the voltage source to the second terminal, the control circuit may assert the fault signal and store a fault code indicative of failure of the operation of the voltage regulator and current monitor circuit and the second current limiter.

In various embodiments, the deployment circuit comprises an analog-to-digital converter comprising an input, wherein the analog-to-digital converter is configured to provide a signal indicative of the voltage at the input of the analog-to-digital converter, and a further switching circuit configured to connect the input of the analog-to-digital converter to the first terminal and the second terminal as a function of a further switching circuit control signal.

In this case, the diagnostic circuitry may comprise a first voltage source configured to provide a first voltage and a second voltage source configured to provide a second voltage, wherein the further switching circuit is configured to connect the input of the analog-to-digital converter to the first voltage source or the second voltage source as a function of the further switching circuit control signal. In this case, a fourth diagnostic operation may comprise a respective first phase, wherein the control circuit is configured to generate the further switching circuit control signal in order to disconnect the input of the analog-to-digital converter from the first terminal and the second terminal, and connect the input of the analog-to-digital converter to the first voltage source, monitor the signal indicative of the voltage at the input of the analog-to-digital converter and determine whether the signal has a first expected value. In response to determining that the signal does not have the first expected value, the control circuit may assert the fault signal and store a fault code indicative of analog-to-digital converter error.

Additionally or alternatively, the fourth diagnostic operation may comprise a respective second phase, wherein the control circuit is configured to generate the further switching circuit control signal in order to disconnect the input of the analog-to-digital converter from the first terminal and the second terminal, and connect the input of the analog-to-digital converter to the second voltage source, monitor the signal indicative of the voltage at the input of the analog-to-digital converter and determine whether the signal has a second expected value. In response to determining that the signal does not have the second expected value, the control circuit may assert the fault signal and store a fault code indicative of analog-to-digital converter error.

In various embodiments, in a fifth diagnostic operation, the control circuit is configured to generate the further switching circuit control signal in order to connect the input of the analog-to-digital converter to the first terminal and the second terminal, generate the first enable signal in order to enable the first current limiter and generate the second enable signal in order to enable the second current limiter, monitor the signal indicative of the voltage at the input of the analog-to-digital converter, determine a value indicative of the resistance between the first terminal and the second terminal as a function of the signal indicative of the voltage at the input of the analog-to-digital converter and determine whether the value indicative of the resistance between the first terminal and second terminal is between a first threshold and a second threshold. In response to determining that the value indicative of the resistance between the first terminal and the second terminal is not between a first threshold and a second threshold, the control circuit may assert the fault signal and store a fault code indicative of an error of the pyrotechnic device.

### Brief description of the drawings

Embodiments of the present disclosure will now be described with reference to the annexed drawings, which are provided purely by way of non-limiting example and in which:
- Figure 1 shows a deployment system for a pyrotechnic device;
- Figure 2 shows an embodiment of a deployment system for a pyrotechnic device realized in accordance with the solution described herein;
- Figure 3 shows a method for performing diagnostic controls in the deployment system of Figure 2;
- Figure 4 shows a circuit for testing an analog-to-digital converter of the deployment system of Figure 2;
- Figures 5A and 5B show a circuit for testing a voltage regulator and current monitoring circuit of the deployment system of Figure 2;
- Figures 6A, 6B, 6C, and 6D show a circuit configured to determine a possible leakage condition at the terminals of the pyrotechnic device by using the voltage regulator and current monitoring circuit of Figures 5A and 5B;
- Figure 7 shows a circuit for verifying the correct connection of a pyrotechnic device to the deployment system of Figure 2;
- Figures 8A, 8B, 8C, and 8D show a circuit for testing the switches of a driver circuit of the deployment system of Figure 2;
- Figure 9 shows a circuit for testing energy reserve capacitors of the deployment system of Figure 2; and
- Figures 10A, 10B, and 10C show further embodiments of methods for performing diagnostics in the deployment system of Figure 2.

### Detailed description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

As mentioned before, various embodiments of the present disclosure provide solutions for performing diagnostics in a deployment system for managing the deployment of a pyrotechnic device, such as a squib or a pyro-fuse.

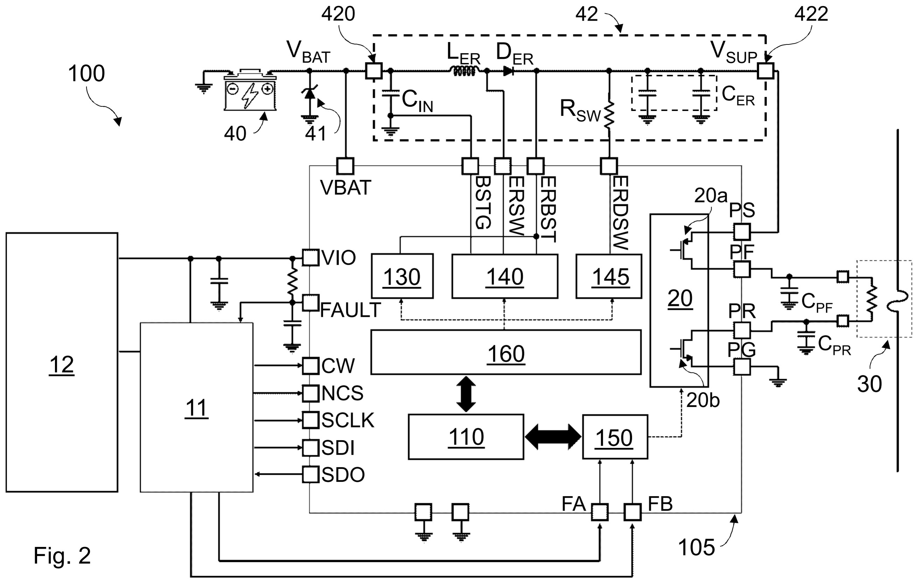

Figure 2 is illustrative of an embodiment of a deployment system 100 according to the present disclosure.

In the embodiment considered, the deployment system 100 comprises a deployment circuit 105, e.g., integrated in a respective integrated circuit, a microcontroller unit 11, a power management circuit 12, a pyrotechnic device 30, and a battery 40. The deployment circuit 105 is coupled to the microcontroller 11, to the power management circuit 12, to the squib or pyro-fuse 30, and to the battery 40.

In various embodiments, the power management circuit 12 is configured to provide as output one or more stable voltages used to supply electrical energy to the deployment system 100. For instance, in the embodiment considered, the power management circuit 12 supplies to the deployment circuit 105 a stable voltage, e.g. equal to 3.3 V or 5 V, which is received at a power supply terminal VIO of the deployment circuit 105.

In various embodiments, the deployment circuit 105 is coupled to the microcontroller 11 through a communication system, preferably a serial communication system, i.e., the deployment circuit 105 comprises a communication interface, preferably a serial communication interface, such as a Serial Peripheral Interface (SPI), an Inter Integrated Circuit (I²C), a Universal Synchronous-Asynchronous Receiver/Transmitter (UART), a Controller Area Network (CAN) or an Ethernet interface. For example, in various embodiments, the deployment circuit 105 is coupled to the microcontroller 11 through a SPI bus, wherein the deployment circuit 105 is configured as a SPI slave, and the microcontroller 11 is configured as a SPI master device. In this regard, the deployment circuit 105 comprises a clock terminal SCLK, a serial data input terminal SDI, and a serial data output terminal SDO. The clock terminal SCLK is used for transmitting a clock signal used for synchronizing data transmission between the master and slave devices. The clock signal is generated by the master device i.e., the microcontroller 11, which coordinates when data is sent and received, with data being typically transmitted on rising or falling edges of the clock signal, ensuring that both the master and slave devices are in sync during communication. The SDI (Serial Data In) terminal is used in the deployment circuit 105 for receiving data from the master device i.e., the microcontroller 11, which can send data to the slave device i.e., the deployment circuit 105, through the SDI line. For instance, the deployment circuit 105 may receive commands or data from the microcontroller 11. In a complementary manner, the SDO (Serial Data Out) terminal is used in the deployment circuit 105 for sending data and/or instructions to the microcontroller 11.

In various embodiments, e.g., in case of a SPI interface, the deployment circuit 105 comprises also a chip-select terminal NCS. The chip-select terminal NCS allows a master device e.g., the microcontroller 11, to select and communicate with a specific slave device such as the deployment circuit 105 or the power management circuit 12.

In various embodiments, the deployment circuit 105 comprises also a wake-up terminal CW. Specifically, the wake-up terminal CW is used for the transmission of wake-up signals between the microcontroller 11 and the deployment circuit 105. For example, the microcontroller 11 may periodically send a wake-up signal to the deployment circuit 105 for managing power states.

In various embodiments, the deployment circuit 105 is configured to produce as output an asserted fault signal indicative of the detection of an anomaly in the deployment circuit 105. The fault signal is outputted at a FAULT terminal comprised in the deployment circuit 105, and may be a one-bit signal, allowing interrupt-based diagnostic strategies fostering the microcontroller 11 resources, i.e., the fault signal may be used to generate an interrupt within the microcontroller 11, e.g., in order to wake-up the microcontroller 11 from a standby condition.

In the embodiment considered, the deployment circuit 105 comprises a control unit/circuit 110 and a deployment driver circuit 20. Specifically, in various embodiments, the deployment driver circuit 20 is configured to energize the pyrotechnic device 30, e.g., the squib or pyro-fuse. For example, in the embodiment considered, the deployment circuit 105 comprises a (positive) power supply terminal PS and a (negative) power supply terminal PG configured to receive a supply voltage V_{SUP}. Moreover, the deployment circuit 105 comprises a first terminal PF and a second terminal PR configured to be connected to the pyrotechnic device 30. For example, in various embodiments, the deployment driver 20 comprises a high-side electronic switch 20a, and a low-side electronic switch 20b, i.e., the electronic switch 20a is connected between the terminals PS and PF, and the electronic switch 20b is connected between the terminals PR and PG. The high-side switch 20a and the low-side switch 20b may be realized using a MOSFET, a BJT, or an IGBT. In various embodiments, one or more current limiters may be connected in series with the electronic switches 20a and/or 20b. For example, a first current limiter may be connected with the electronic switch 20a between the terminals PS and PF, and/or a second current limiter may be connected with the electronic switch 20b between the terminals PR and PG.

In various embodiments, the supply voltage V_{SUP} may be provided by a battery 40, i.e., the voltage V_{SUP} may correspond to the voltage V_{BAT} at the battery 40. Conversely, in various embodiments, the deployment system 100 comprises one or more electronic converters for generating the supply voltage V_{SUP} based on the battery voltage V_{BAT}. For example, the electronic converter may be a boost converter, e.g., in case of a low-voltage battery 40 typically provided in internal combustion engine vehicle, or a buck converter, e.g., in case of a high-voltage battery typically provided in battery electric vehicles.

For example, Figure 2 shows an embodiment, wherein the electronic converter comprising a switching circuit 42 and an electronic converter control circuit 140. In various embodiments, the electronic converter control circuit 140 is implemented within the deployment circuit 105.

For example, in the embodiment considered, the switching circuit 42 is a boost converter comprising an input terminal 420 configured to be connected to the battery voltage V_{BAT} and an output terminal 422 configured to provide the supply voltage V_{SUP}. Moreover, the switching circuit 42 comprises an inductance L_{ER} and a diode D_{ER} connected in series between the terminals 420 and 422, and one or more (output or energy reserve) capacitances C_{ER} connected between the output terminal 422 and ground. In various embodiments, the switching circuit 42 comprises also one or more (input) capacitances C_{IN} connected between the output terminal 420 and ground. In various embodiments, a transient voltage suppression diode 41 may be connected between the terminal 420 and ground, e.g., in order to clamp overvoltages and dissipate high transient power surges.

Specifically, in the embodiment considered, the electronic converter control circuit 140 is configured to selectively connect the intermediate node between the inductance L_{ER} and diode D_{ER} to ground. For example, in the embodiment considered, the deployment circuit 105 comprises a terminal ERSW configured to be connected to the intermediate node between the inductance L_{ER} and diode D_{ER}, and a terminal BSTG configured to be connected to ground. Accordingly, in the embodiment considered, the electronic converter control circuit 140 is configured to selectively connect the terminal ERSW to ground, e.g., via an electronic switch connected between the terminal ERSW and BSTG. In various embodiments, the switch may be internal or external with respect to the deployment circuit 105.

In fact, as usual in a boost converter, when the intermediate node between the inductance L_{ER} and the diode D_{ER} is connected to ground during a switch-on period T_{ON}, the current flowing through the inductance L_{ER} increases substantially linearly. Conversely, when the intermediate node between the inductance L_{ER} and the diode D_{ER} is not connected to ground during a switch-on period T_{ON}, the current flowing though the inductance L_{ER} passes to the output terminal 422, thereby charging the capacitance(es) C_{ER}.

In the embodiment considered, the deployment circuit 105 comprises also a terminal ERBST configured to be connected to the terminal 422, i.e., the voltage V_{SUP}. For example, in this way, the terminal ERBST may be used to provide a feedback of the voltage V_{SUP} and the electronic converter control circuit 140 may be configured to vary the times T_{ON} and/or T_{OFF} in order to regulate the voltage V_{SUP} to a requested valued.

In various embodiment, the deployment circuit 105 may comprise an internal voltage regulator 130 configured to generate one or more internal supply voltages, e.g., used to control the operation of the driver circuit 20. In various embodiments, the internal voltage regulator 130 may be supplied by the battery voltage V_{BAT} and/or the supply voltage V_{SUP}. For example, in various embodiments, the internal voltage regulator 130 receives the voltage at the terminal ERBST, i.e., the supply voltage V_{SUP}. In fact, in this way, the deployment circuit 105 is operative, also in case of a power failure of the battery voltage VBAT, because the capacitance(es) C_{ER} act as an energy reserve for the supply voltage V_{SUP}.

As shown in Figure 2, in various embodiments, the deployment circuit 105 may also comprise a terminal VBAT configured to be connected to the battery 40, e.g., the terminal 420. For example, in this way, the deployment circuit 105 may monitor the battery voltage V_{BAT}, e.g., in order to detect a battery failure.

In various embodiments, the deployment circuit 105 comprises also a discharge circuit 145 configured to selectively discharge the capacitance(s) C_{ER}. For example, in the embodiment considered, the deployment circuit 105 comprises a terminal ERDSW configured to be connected, e.g., via a resistance R_{DCH}, to the terminal 422. For example, in various embodiments, the discharge circuit 145 is configured to selectively connect the terminal ERDSW to ground, e.g., to the terminal BSTG. For example, the discharge circuit 145 may comprise for this purpose an electronic switch. In various embodiments, the switch may be internal or external with respect to the deployment circuit 105.

In various embodiment, the deployment circuit 105 comprises a first arming terminal FA and a second arming terminal FB configured to be connected to the microcontroller 11, and an arming logic circuit 150 receiving the signals received via the arming terminals FA and FB. For instance, the microcontroller 11 may send to the deployment circuit 105 instructions for arming the deployment driver 20 in response to given events. Accordingly, in various embodiments the arming logic circuit 150 is configured to arm the driver circuit 20, hence to prepare the squib or pyro-fuse 30 for being activated or deployed. Such an arming procedure ensures that the pyrotechnic device 30 is ready to be triggered when needed, typically by an external signal or condition, such as the deployment of an airbag. In particular, the microcontroller 11 may send arming signals to the arming logic circuit 150 for preparing the pyrotechnic device 30 for deployment, for instance once an incident is detected.

In various embodiments, the deployment circuit 105 may comprise further circuits, such as one or more digital comparators, and/or one or more analog-to-digital converters, ADCs. Such components are not represented in Figure 2 for the sake of simplicity, as they may be useful for acquiring voltages and other electrical quantities. For example, the measurement of the battery voltage V_{BAT} may involve an analog-to-digital converter. In general, the analog comparators and the ADCs may be provided in one or more circuits of the deployment circuit 105 such as, for instance, the control unit 110 or the deployment driver circuit 20.

In various embodiments, the control unit 110 is configured to periodically perform diagnostic routines for detecting anomalies in the deployment system 100. For this purpose, in various embodiments, the deployment circuit 105 comprises a diagnostic circuit 160. For example, the diagnostic circuit 160 may be configured to monitor one or more circuits of the deployment circuit 105, such as the voltage regulator 130, the electronic converter control circuit 140, the discharge circuit 145 and/or the driver circuit 20. An exemplary diagnostic routine comprises one or more of the following controls: an analog comparator test, an analog-to-digital converter test, a voltage regulator/current monitor test, an output leakage test, a connection test of the pyrotechnic device, a deployment switch test and an energy reserve capacitor test.

In particular, in various embodiments, the control unit 110 is configured to repeat the diagnostic controls at a common test rate ZT. Alternatively, in various embodiments, each diagnostic check is associated to a respective testing rate, in order to provide to users increased flexibility for arranging a desired diagnostic routine. For example, a user may need to perform diagnostic checks which are simpler, less power consuming, and less stressing on components more often, whereas checks which are more power consuming, and/or are causing more stress on the electrical components, at a lower repetition rate.

In various embodiments, the diagnostic circuitry 160 is configured to perform, in cooperation with the control unit 110, one or more of the aforementioned diagnostic checks.

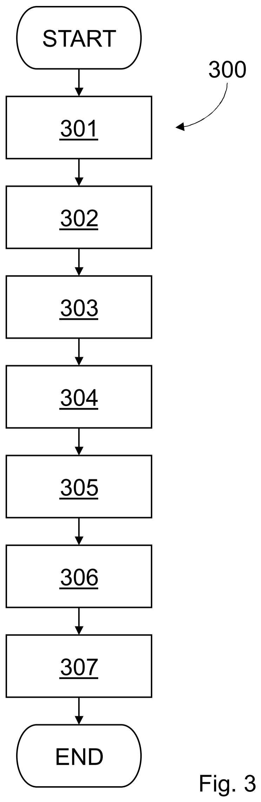

Figure 3 is illustrative of a method 300 for the diagnostic of the deployment system 100. For example, the operation shown in Figure 3 may be implemented via the control circuit 110, which generates control signals for the diagnostic circuit(s) 160 in order to perform respective tests.

In the embodiment considered, after a starting step, performed for instance when the deployment system 100 is powered on e.g., at the turn-on of a vehicle comprising the deployment system 100, the control unit 110 performs in a step 301 a diagnostic check on one or more analog comparators of the deployment circuit 105.

For example, during the step 301, the control unit 110 assesses whether the analog comparators included in the deployment system 100 are working correctly in accordance to practices per se known to the person skilled in the art. To this end, the testing circuitry 160 may comprise additional circuitry for performing such a diagnostic check. In response to detecting a fault in the analog comparators, the control unit 110 asserts the signal FAULT in order to signal to the microcontroller 11 the presence of a fault in the deployment circuit 105. In addition to the assertion of the fault signal FAULT, the control unit 110 outputs at the SDO terminal a respective fault code ZF in order to signal that one or more analog comparators exhibit an anomalous behavior during such test. For example, in the context of a SPI protocol, the control circuit 110 may assert the fault signal FAULT. In response to determining that the fault signal FAULT is asserted, the microcontroller 11 sends via the (e.g., SPI) interface a request/command and the control circuit 110 returns the fault code ZF.

Successively, in a step 302, the control unit 110 performs a diagnostic check on one or more analog-to-digital converters of the deployment circuit 105, in particular for assessing the integrity of conversion paths of an ADC.

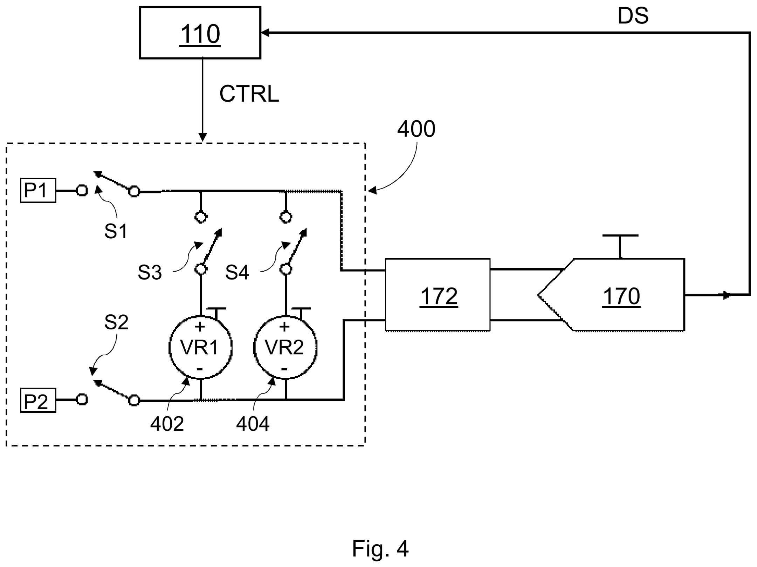

In this regard, Figure 4 shows an embodiment of an ADC testing circuit 400 for an analog-to-digital converter (ADC) 170. For example, the ADC 170 may be integrated in the control circuit 110.

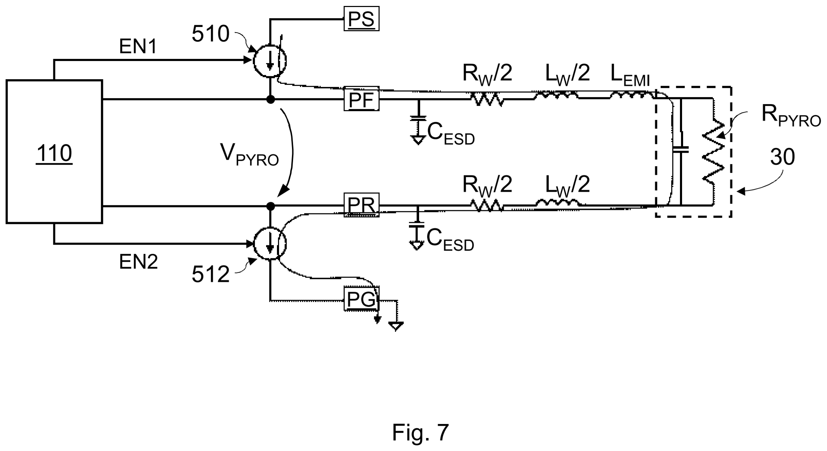

For example, the ADC testing circuit 400 may be integrated in the diagnostic circuit 160 shown in Figure 2. In the embodiment considered, the ADC 170 is connected to terminals P1 and P2. For example, as will be described with respect to Figure 7, the terminals P1 and P2 may correspond to the terminals PF an PR shown in Figure 2. However, the terminals P1 and P2 may also be connected to other voltages. For example, the terminal P2 may be connected to ground (e.g., the terminal BSTG) and the terminal P1 may be connected to the terminal VBAT or ERBST. In various embodiments, the control circuit 110 may control the connection of the terminals P1 and P2 via a switching circuit, such as a crossbar or multiplexer.

As illustrated, the ADC testing circuit 400 comprises an electronic switch S1 for connecting/disconnecting the first contact P1 and a second electronic switch S2 for connecting/disconnecting the second contact P2. For example, these electronic switch P1 and P2 may form part of a crossbar or multiplexer.

In the embodiment considered, the ADC testing circuit 400 comprises a voltage source 402 configured to provide a voltage VR1, and optionally one or more further voltage sources 404 configured to provide respective further voltages, e.g. a voltage VR2. Moreover, the ADC testing circuit 400 comprises an electronic switch S3 for connecting/disconnecting the voltage source 402, and optionally further electronic switches S4 for connecting/disconnecting the further voltage sources 402. In various embodiments, the control circuit 110 controls the switching state of the electronic switches S1 to S4 via one or more control signals CTRL.

Accordingly, in various embodiments, during the execution of the phase 302, the control unit 110, in cooperation with the ADC testing circuit 400, disconnects the ADC 170 from the respective inputs P1 and P2 by commanding the switches S1 and S2. Next, the control unit 110 applies to the ADC 410 different internal reference voltages by selectively closing one of the switches S3 and S4. Subsequently, the control unit 110 checks, for each testing voltage applied, the obtained results, indicated in Figure 4 as digital sample DS, for conversion errors, e.g., by comparing the digital sample DS with respective threshold values.

In various embodiments, the ADC 170 may have associated a divider and/or level shifter circuit 172. In this case, the control circuit 110 may also select different divider factors, each time verifying whether the digital sample DS has an expected value.

In response to detecting a fault, the control unit 110 asserts the signal FAULT in order to signal to the microcontroller 11 the presence of a fault in the deployment circuit 105, and outputs a corresponding fault code ZF on the serial data output terminal SDO for signaling the error detected.

In other words, the analog-to-digital converter testing circuit 400 is configured to selectively couple the voltage source 402 or one of the optional further voltage sources 404 to the analog-to-digital converter 170 under test by means of a plurality of switches S1, S2, S3, S4, to subsequently compare one or more values DS outputted by the analog-to digital converter 170 under test to respective expected/reference values and, in response to detecting that at least one outputted value is different from the respective expected/reference value, signal a fault in the analog-to-digital converter under test by asserting the fault signal FAULT and by outputting a respective fault code ZF.

In various embodiments, the circuit 400 (or an additional circuit) may be used to test an analog comparator. For example, in this way, the switches S1 and S2 may be used to disconnect the analog comparator from respective terminals P1 and P2, and the switches S3 and S4 may be used to connect the comparator sequentially to two voltages VR1 and VR2, wherein one voltage is above the threshold value of the analog comparator and the other voltage is below the threshold value of the analog comparator, wherein the control circuit 110 monitors in both cases the logic level of the comparison signal provided by the analog comparator.

In a step 303, the control unit 110 performs a diagnostic of a voltage regulator and current monitor circuit 500.

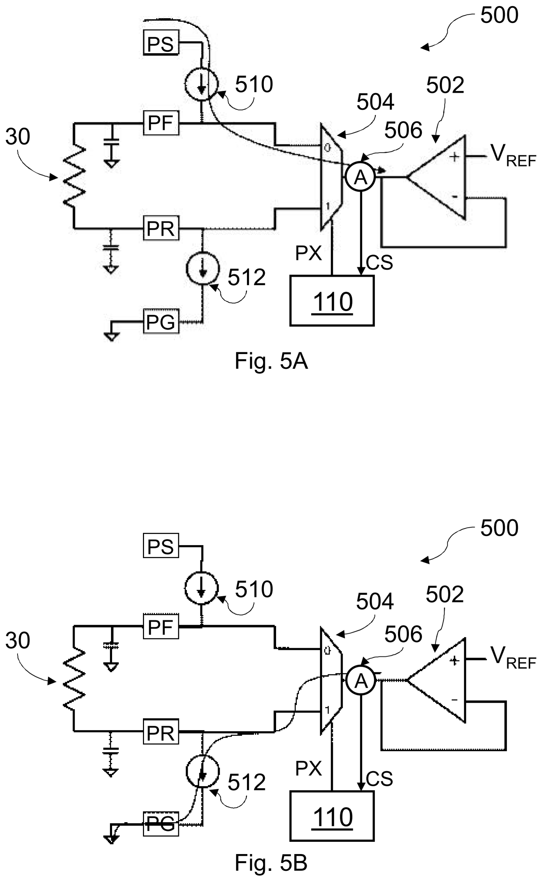

Specifically, as shown in Figures 5A and 5B, in various embodiments, the diagnostic circuit 160 comprises a voltage regulator/current monitor circuit 500. Specifically, the circuit 500 is configured to apply a voltage V_{REF} to the terminal PF or PR, and monitor a signal indicative of the current flowing through the output of the circuit 500. For example, in the embodiment considered, the circuit 500 comprises a voltage source 502. For example, in the embodiment considered, the voltage source 502 is implemented with a voltage follower receiving a reference voltage V_{REF}. However, also other voltage sources may be used. In various embodiments, the voltage V_{REF} provided by the voltage source 500 is smaller than the voltage V_{SUP}, e.g., V_{REF} corresponds approximately to 50% of the voltage V_{SUP}. For example, for this purpose, the voltage V_{REF} may be provided by a voltage divider connected between the voltage V_{SUP}. However, the voltage source 502 may also provide different voltages. For example, in various embodiments, the voltage V_{REF} is selected in a range between 2 and 5 V, e.g., 2.5 V. For example, the voltage V_{REF} may be provided by the voltage regulator 130. In various embodiments, the voltage source 502 may correspond to the voltage source 402 shows in Figure 4, whereby the voltage V_{REF} corresponds to the voltage VR1 and has already been tested during the step 302.

In various embodiments, the voltage source 502 comprises also a current limiter (not shown in the Figures), configured to limit the amplitude of the current at the output of the voltage source 502 to a maximum value, i.e., the current sunk or sourced by the voltage source 502 is limited.

Moreover, in the embodiment considered, the circuit 500 comprises a switching circuit 504 configured to selectively connect the output of the voltage source 502 to the terminal PF or PR as a function of a control signal PX. For example, in Figures 5A and 5B is shown a multiplexer 504, however, indeed the output of the voltage source 502 may be connected via a first electronic switch to the terminal PF and via a second electronic switch to the terminal PR.

Moreover, in various embodiments, the circuit 500 comprises a current sensor 506 configured to generate a signal CS indicative of (and preferably proportional to) the current provided or sunk by the voltage source 502. For example, in the embodiment considered, the current sensor 506 is arranged between the output of the voltage source 502 and the switching circuit 504.

Accordingly, the control circuit 110 may generate the signal PX in order to connect the voltage source 502 to the terminal PF or PR (or disconnect the voltage source 502) and monitor the signal CS. For example, in order to monitor the signal CS, the control circuit 110 may comprise one or more analog comparators, or may receive via an ADC 170 a digital sample of the signal CS. For example, in various embodiments, the control circuit 110 or directly the circuit 500 comprises also one or more analog current comparators configured to generate one or more signals indicating whether the current sunk by the voltage source 502 (i.e., a negative current flow at the output of the voltage source 502) exceeds a first threshold and/or whether the current sourced by the voltage source 502 (i.e., a positive current flow at the output of the voltage source 502) exceeds a second threshold. In various embodiments, the thresholds are selected to detect current flows being smaller than the maximum value of the current limiter of the voltage source 502. For example, in various embodiments, the control circuit 110 is configured to use the one or more signals to determine whether the current at the output of the voltage source 502 is substantially zero. In various embodiments, the control circuit 110 is configured to use the one or more signals to determine the direction of the current flow. As will be described in greater detail in the following, the circuit 500 is used to perform various test, such as a leakage test.

Moreover, in various embodiments, as will be described with respect to Figure 7, in order to test the connection of a pyrotechnic device 30, the control circuit 110 is configured to monitor a value RM indicative of the resistance R_{PYRO} between the terminals PF and PR. For this purpose, the control circuit 110 may enable a (small) current flow I_{MEAS} through the terminal PF and PR.

Specifically, in various embodiments, the diagnostic circuit 160 comprises for this purpose a first current source or limiter 510 connected between the terminals PS and PF, and a second current source or limiter 512 connected between the terminals PR and PG. Specifically, the current limiter 510 is configured to limit the current flowing between the terminal PS and PF to the measurement current I_{MEAS}, and the current limiter 512 is configured to limit the current flowing between the terminal PR and PG to the same measurement current I_{MEAS}. Specifically, while in Figures 5A and 5B are just shown the current limiters 510 and 512, indeed these current limiters may be selectively be enabled via respective control signals provided by the control circuit 110. For example, indeed the current limiters 510 and 512 may comprise a respective electronic switch for connecting the current limiter between the respective terminals. For example, in Figure 7, the control circuit 110 is configured to generate a signal EN1 for enabling the current limiter 510 and a signal EN2 for enabling the current limiter 512.

Specifically, in various embodiments, the control unit 110 performs at the step 303 a diagnostic of the voltage regulator and current monitor circuit 500. In various embodiments, the diagnostics of the voltage regulator and current monitor module 500 comprises performing two steps.

Specifically, in the first phase shown in Figure 5A, the control circuit 110 enables the current limiter 510 (e.g., by asserting the enable signal EN1 and de-asserting the enable signal EN2) and drives the switching circuit 504 (via the signal PX) in order to connect the voltage source 502 to the terminal PF. Accordingly, when the current limiter 510, the switching circuit 504, the current sensor 506 and the voltage source 502 are working correctly, a current will flow from the terminal PS to the voltage reference V_{REF}. Accordingly, by comparing the signal CS with an expected value, the control circuit 110 may determine, whether the voltage regulator and current monitor circuit 500 and the current limiter 510 are working correctly. Alternatively, the control circuit 110 may just determine, e.g., via an analog comparator, the direction of the current flow, i.e., whether a current is flowing from the terminal PF to the output of the voltage source 502, e.g., because the signal CS indicates a negative current flow.

Accordingly, in various embodiments, in response to detecting that the signal CS does not have the expected value, the control circuit asserts the fault signal FAULT while outputting a respective error code ZF at the output terminal SDO. After the first step is performed, the first current generator 510 is switched off.

Conversely, in the second phase shown in Figure 5B, the control circuit 110 enables the current limiter 512 (e.g., by asserting the enable signal EN2 and de-asserting the enable signal EN1) and drives the switching circuit 504 (via the signal PX) in order to connect the voltage source 502 to the terminal PR. Accordingly, when the current limiter 510, the switching circuit 504, the current sensor 506 and the voltage source 502 are working correctly, a current will flow from the voltage reference V_{REF} to the terminal PG. Accordingly, by comparing the signal CS with an expected value, the control circuit 110 may determine, whether the voltage regulator and current monitor circuit 500 and the current limiter 512 are working correctly. Alternatively, the control circuit 110 may just determine, e.g., via an analog comparator, the direction of the current flow, i.e., whether a current is flowing from the output of the voltage source 502 to the terminal PR, e.g., because the signal CS indicates a positive current flow.

Accordingly, in various embodiments, in response to detecting that the signal CS does not have the expected value, the control circuit asserts the fault signal FAULT while outputting a respective error code ZF at the output terminal SDO. After the second step is performed, the second current generator 512 is switched off.

In various embodiments, the steps shown in Figures 5A and 5B may be inverted. Moreover, in various embodiments, the circuit 500 may also be implemented with two voltage sources, wherein the first voltage source may be connected to the terminal PF and the second voltage source may be connected to the terminal PR.

In a step 304, the control unit 110 performs a leakage test on the output terminals PF and PR of the deployment circuit 105. In particular, during the step 304 the control unit 110 assesses whether the terminals PF and PR show parasitic leakages towards battery or ground.

In various embodiments, this diagnostic check is performed by means of the voltage regulator and current monitor circuit 500, and comprises performing a first step, wherein the high-side switch output PF is tested, and a second test, wherein the low-side switch input PR is tested. Specifically, during these tests, the control circuit 110 is configured to disable the current limiters 510 and 512 shown in Figures 5A and 5B, e.g., by de-asserting the enable signal EN1 and EN2, connect the voltage source 502 via the signal PX either to the terminal PF or PR, and monitor the measurement signal CS.

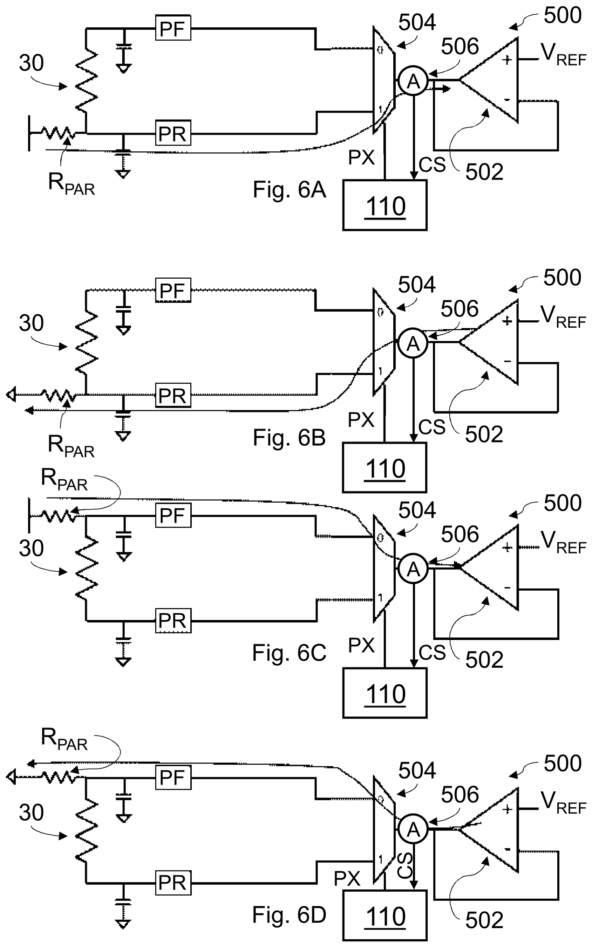

For example, in a first step, the control circuit 110 connects the voltage source 502 via the signal PX to the terminal PR. Accordingly, when the terminal PR is connected via a parasitic (leakage) resistance R_{PAR} to the supply voltage V_{SUP} (see Figure 6A), a current will flow from the terminal PR to the output of the voltage source 502. According in response to determining that the signal CS indicates a negative current flow, the control circuit 110 may detect a leakage error from to the supply voltage V_{SUP}.

Conversely, when the terminal PR is connected via a parasitic (leakage) resistance R_{PAR} to ground (see Figure 6B), a current will flow from the output of the voltage source 502. to the terminal PR. According in response to determining that the signal CS indicates a positive current flow, the control circuit 110 may detect a leakage error to ground.

In various embodiments, instead of detecting the leakage type, the control circuit 110 may just determine whether the signal CS indicates that measure current is substantially zero. On the contrary, a non-null current value is indicative of a leak occurring at the terminal PR.

Accordingly, in response to detecting a leakage, the control unit 110 signals an error by asserting the fault signal FAULT, and by outputting at the data output terminal SDO a corresponding error code ZF.

Similarly, in a second step, the control circuit 110 connects the voltage source 502 via the signal PX to the terminal PF. Accordingly, when the terminal PF is connected via a parasitic (leakage) resistance R_{PAR} to the supply voltage V_{SUP} (see Figure 6C), a current will flow from the terminal PF to the output of the voltage source 502. According in response to determining that the signal CS indicates a negative current flow, the control circuit 110 may detect a leakage error from to the supply voltage V_{SUP}.

Conversely, when the terminal PF is connected via a parasitic (leakage) resistance R_{PAR} to ground (see Figure 6D), a current will flow from the output of the voltage source 502. to the terminal PF. According in response to determining that the signal CS indicates a positive current flow, the control circuit 110 may detect a leakage error to ground.

In various embodiments, instead of detecting the leakage type, the control circuit 110 may just determine whether the signal CS indicates that the measured current is substantially zero. On the contrary, a non-null current value is indicative of a leak occurring at the terminal PF or PR, respectively.

Accordingly, in response to detecting a leakage, the control unit 110 signals an error by asserting the fault signal FAULT, and by outputting at the data output terminal SDO a corresponding error code ZF.

In a step 305, the control unit 110 obtains a value RM indicative for the resistance R_{PYRO} between the terminals PF and PR. Figure 7 also highlights the presence on both wires of parasitic wire resistances R_{W}/2 and parasitic wire inductances L_{W}/2, along with electrostatic discharge capacitances C_{ESD} and EMI suppression inductances L_{EMI}.

Specifically, in various embodiments, the control circuit 110 enables during this test the current limiters 510 and 512, e.g., by asserting the enable signals EN1 and EN2. Accordingly, a current I_{MEAS} will flow through the pyrotechnic device 30. For example, in various embodiments, the current I_{MEAS} is selected in a range between 5 and 100 mA, e.g., between 20 and 60 mA, e.g., about 40 mA. In various embodiments, the value I_{MEAS} may be settable, e.g., programmable. For example, programmable values disclosed herein may be received via the serial communication interface of the control circuit 110 and/or stored to a non-volatile memory of the control circuit 110.

Next, in various embodiments, the control circuit 110 obtains a signal MV indicative of the voltage V_{PYRO} between the terminals PF and PR, e.g., by using the ADC 170. In various embodiments, the control circuit 110 may also obtain a signal MI indicative of the current I_{PYRO} provided via the terminals PF and PR. In this case, the control circuit 110 may compute the value MR (indicative of the resistance R_{PYRO}) as the ratio MV/MI, i.e., MR = MV/MI.

In various embodiments, instead of explicitly measuring the current I_{PYRO}, which should correspond to the maximum value I_{MEAS}, the control circuit 110 may assume that the value MI corresponds to a predetermined value (corresponding to the value I_{MEAS}), i.e. the control circuit 110 may compute the value MR (indicative of the resistance R_{PYRO}) as the ratio MV/MI, i.e., MR = MV/MI, where MI is a predetermined value. In various embodiments, the control circuit 110 may assume that the value MI corresponds to a predetermined value (corresponding to the value I_{MEAS}), and simply use the value MV for the value MR, i.e., MR = MV.

Specifically, in case an undeployed pyrotechnic device 30 is connected between the terminals PF and PR, the resistance R_{PYRO} between the terminals PF and PR should be in an expected range. Accordingly, in various embodiments, the control circuit 110 compares the value MR (indicative of the resistance R_{PYRO}) with a first and a second threshold, where the second threshold is greater than the first threshold. For example, a typical undeployed pyrotechnic device 30 should have a resistance value between 1 and 3 Ω. Accordingly, in various embodiments, the first threshold may indicate a minimum resistance of a correctly connected undeployed pyrotechnic device 30, e.g., a resistance of 1 Ω, and the second threshold may indicate a maximum resistance of a correctly connected undeployed pyrotechnic device 30, e.g., a resistance of 3 Ω. In various embodiments, the first threshold and/or the second threshold may be settable, e.g., programmable.

Accordingly, in various embodiments, in response to determining that the value MR is smaller than the first threshold or greater than the second threshold, the control circuit 110 signals an error by asserting the fault signal FAULT, and by outputting at the data output terminal SDO a corresponding error code ZF for a connection error.

In a step 306, the control unit 110 performs a test of the switches 20a and 20b of the deployment driver 20. In particular, during the step 306 the control unit 110 assesses whether the high-side switch 20a and the low-side switch 20b switch on and off properly.

Such an assessment is performed by means of the voltage regulator and current monitor circuit 500, and comprises performing a first step, wherein the high-side switch 20a is tested, and a second test, wherein the low-side switch 20b is tested.

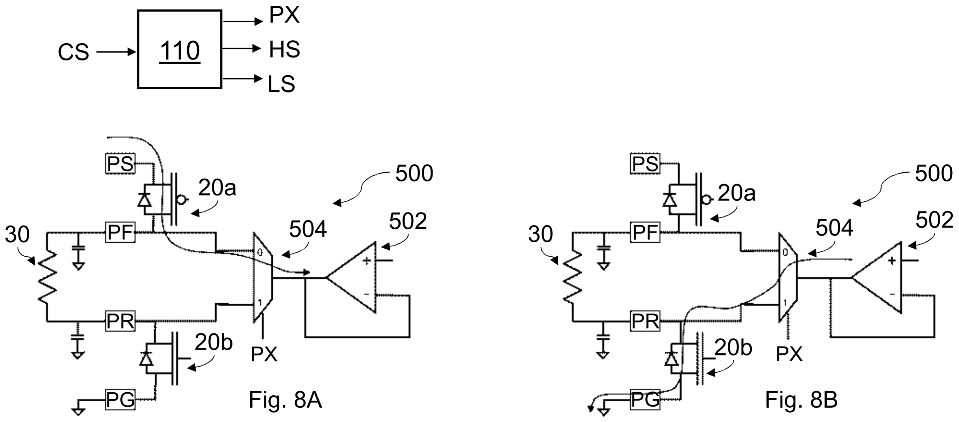

In particular, in a first step of the deployment switches diagnostics, the control circuit connects the voltage source 502 to the terminal PF and closes the high-side switch 20a (while the low-side switch 20a is opened), e.g., via a high-side control signal HS, thus creating a short-to-battery condition, as pictured in Figure 8A.

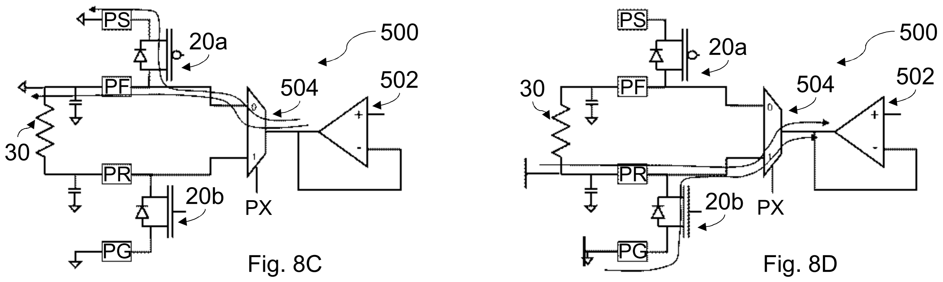

Thus, in this condition the signal CS should indicate a current flow towards the output of the voltage source 502. Consequently, the control unit 110 verifies whether the voltage regulator/current monitor module 500 detects the short-to-battery. In the positive, the high-side switch 20a works correctly, whereas in the negative, the high-side switch 20a is malfunctioning (e.g., as shown in Figure 8C), and the control unit 110 signals the anomaly by asserting the fault signal FAULT, and by outputting at the data output terminal SDO a corresponding error code ZF.

Similarly, in a second step of the deployment switches diagnostics, the control circuit connects the voltage source 502 to the terminal PR and closes the low-side switch 20b (while the high-side switch 20a is opened), e.g., via a low-side control signal LS, thus creating a short-to-ground condition, as pictured in Figure 8B.

Thus, in this condition the signal CS should indicate a current flow from the output of the voltage source 502. Consequently, the control unit 110 verifies whether the voltage regulator/current monitor module 500 detects the short-to-ground. In the positive, the low-side switch 20b works correctly, whereas in the negative, the low-side switch 20b is malfunctioning (e.g., as shown in Figure 8D), and the control unit 110 signals the anomaly by asserting the fault signal FAULT, and by outputting at the data output terminal SDO a corresponding error code ZF.

Usually, it is not required to verify in this stage explicitly the open state of the high-side switch 20a, because this condition has already been verified implicitly via the previous tests, e.g., the tests of Figures 6A to 6B, which require that the high-side switch 20a and the low-side switch 20b are opened.

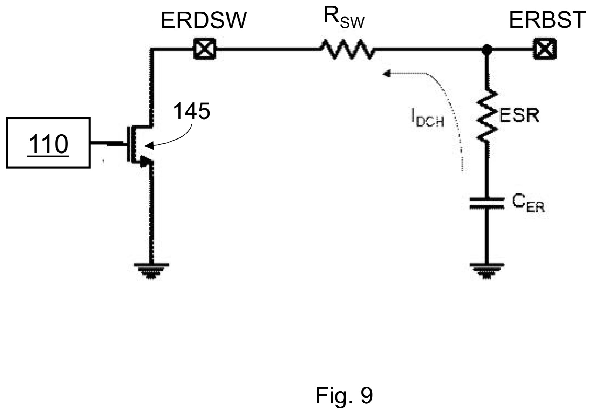

Successively, in a step 307, the control unit 110 performs diagnostic of the energy reserve capacitor(s) C_{ER}. Such diagnostics check is performed by means of the discharge circuit 145, as illustrated in Figure 9.

In particular, during the diagnostics of the energy reserve capacitor C_{ER} the control unit 110 samples the supply voltage V_{SUP}, e.g., by sampling via the ADC 170 the voltage at the terminal ERBST. Next, the control circuit 110 enabled the discharge circuit 145 in order to discharge the capacitor C_{ER}. For example, as shown in Figure 9, the discharge circuit 145 may be implemented with an electronic switch connected between the terminal ERDSW and ground, e.g., the terminal BSTG. After a predetermined time delay, the control unit 110 disables the discharge circuit 145 and samples again the voltage across the discharge resistance R_{DCH} through the ADC.

In various embodiments, at this point, the control unit 110 calculates the capacitance and the Equivalent Series Resistance (ESR) values of the energy reserve capacitor C_{ER}, and compares such values with respective predetermined ranges.

If the obtained capacitance and ESR are within the specified ranges, the test indicates that the energy reserve capacitor C_{ER} is working properly, whereas if either the found capacitance or the ESR are outside the respective range, an anomaly of the energy recovery capacitor is signaled by asserting the fault signal FAULT, and by outputting at the data output terminal SDO a corresponding error code.

After executing the step 307, the method 300 terminates. In various embodiments, the method 300 for performing diagnostics on the deployment system 100 may be repeated periodically. In various embodiments, the steps 301 to 307 may also be executed in a different order.

Accordingly, in various embodiments, the diagnostic circuit 110 may comprise the voltage regulator and current monitor circuit 500 and the current limiters 510 and 512. Conversely, during the various tests, the control circuit 110 generates various control signal in order to:
- connect the voltage regulator and current monitor circuit 500 to the terminal PF or PR, or disconnect the voltage regulator and current monitor circuit 500;
- selectively enable the current limiter 510 and/or the current limiter 512;
- selectively close the high-side switch 20a and/or the low-side switch 20b; and/or
- selectively enabled the discharge circuit 145.

Moreover, during the various tests, the control circuit 110 monitors the signal CS (indicative of the current flowing through the output of the voltage source 502) and/or the signal DS at the output of the ADC 170, e.g., used to obtain the signal MV (indicative of the voltage between the terminals PF and PR).

Specifically, in various embodiments, the control circuit 110 is implemented with a hardware Finite-State Machine (FSM), e.g., implemented with a sequential logic circuit, which is configured to executed one of more of the test steps 301 to 307 in sequence, while monitoring the signals CS and MR. For example, for this purpose, the FSM may comprise for each step 301 to 307 one or more respective states, e.g., in order to set control signals as described with respect to 4 to 9, wait a given time-period and proceed to a next state based on the value of the signal CS and/or DS.

As discussed before, one problem affecting the available solutions for testing squib or pyro-fuses deployment systems concerns the stress applied on electrical components, that may lead to a premature ageing.

In this regard, the present solution encompasses countermeasures for preventing such early ageing.

In various embodiments, the method 300 for performing diagnostics on the deployment system 100 comprises additional checks for each step for controlling the execution rate ZT of each diagnostic control. For instance, the control unit 110 may comprise one or more values of repetition periods ZT associated to each testing step comprised in the diagnostic routine 300, indicating a time frequency at which each testing step is performed. Further, in various embodiments the repetition periods ZT values may be stored in a memory included in the control unit 110, wherein the repetition periods ZT are programmable by accessing the control unit 110 through the communication interface. For example, the memory included in the control unit 110 may be a non-volatile memory, in such a way that once the repetition periods ZT are stored in the control unit 110 by accessing the memory through the communication interface e.g., the Serial Peripheral Interface (SPI) bus, the values ZT are stored also in case of brown-outs or losses of power supply. Alternatively, the memory may be a volatile memory in such a way that the deployment circuit 105, in particular the control unit 110, may acquire from the microcontroller 11 the desired values of repetition times ZT for each diagnostic step.

Moreover, the control unit 110 may perform the controls discussed in the foregoing in a different order, or perform only a part of such tests. In particular, a reduced diagnostic routine, comprising one or more steps of the method 300, may be performed in response to specific events occurring in the vehicle.

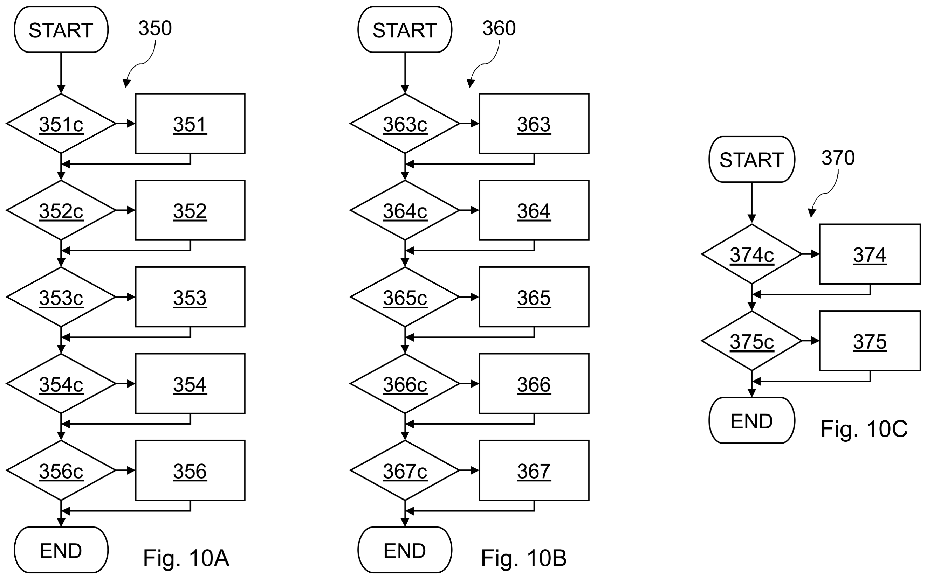

In this regard, Figures 10A, 10B, and 10C are illustrative of possible examples of method implementing reduced diagnostic routines. As pictured, each step of the methods 350, 360, and 370 is coupled to a checking step, denoted by the suffix 'c' at the end of the label, that verifies whether the execution of the corresponding control is required or not.

In particular, Figure 10A is illustrative of a method 350 for performing diagnostics on the deployment system 100 according to the present solution during a power-up sequence.

For instance, such method 350 may be executed at the power-up of the deployment system 100, which may occur when a vehicle is started or is undergoing a first start after the manufacturing.

After a starting step, performed for instance at the power-on of the vehicle, the control unit 110 may perform in a first phase 351, the testing of analog comparators e.g., by executing an Analog Built-In Self-Test (ABIST), in accordance with the step 301 described above.

Successively, in a phase 352, the control unit 110 performs diagnostics of the analog-to-digital converters e.g., a hardware self-check routine, in accordance with the step 302 of the method 300.

Consequently, the control unit 110 performs, in a phase 353, diagnostics of the voltage regulator and current monitor module 500 in accordance with the phase 303.

After the diagnostics of the voltage regulator and current monitor module 500, the control unit 110 performs in a phase 354 the leakage test in accordance with the phase 304 of the method 300.

Finally, in a step 356, the control unit 110 performs the test of the switches 20a, 20b in accordance with the phase 306 described above.

As anticipated above, in various embodiments each step is associated to a respective repetition rate ZT. For instance, a first repetition rate ZT1 may be associated to the step 301 (or 351), in such a way that the control unit 110 executes such step only when requested. The repetition rates ZT and the check may be implemented respectively as an integer value, and as a modulo operation between an iteration counter or index, which is to be increased once for every time the method 300 (or 350) is repeated, and the integer value repetition rate ZT. If the modulo operation returns a value equal to zero, the corresponding diagnostic check is executed while, on the contrary, the diagnostic check is skipped.

As a further example, Figure 10B shows a flowchart representing a full run-time diagnostic sequence, embodied in a method 360.

In such full run-time diagnostic sequence, after a starting step, the control unit 110 performs the following diagnostic checks:
- testing the voltage regulator modules 130, 140, as performed in the phase 303, in a phase 363;
- performing a leakage test, as performed in the phase 204, in a phase 364;
- performing a resistance measurement test on the squib or pyro-fuse 30, as performed in the phase 305, in a phase 365;
- testing the switches 20a, 20b, as performed in the phase 306, in a phase 366; and
- performing an energy reserve capacitor diagnostic, as performed in the phase 307, in a phase 367.

As illustrated, also in this example each step is performed in response to verifying, in steps 363c, 364c, 365c, 366c, and 367c, that each respective repetition rate ZT is allowing the execution of a given step, at a given iteration of the method 360.

Figure 10C illustrates a further example of a method 370, embodying an exemplary simplified run-time diagnostic routine.

Such method 370 comprises:
- performing a leakage test, as performed in the phase 304, in a phase 374; and
- performing a resistance measurement test on the squib or pyro-fuse 30, as performed in the phase 305, in a phase 375.

Such method 370 may be executed iteratively, even when a vehicle is parked, while advantageously keeping a lower power consumption with respect to a system employing a microcontroller. This also reduces the stress applied to the electrical components.

In view of the above, the features of the present solution are clear, as well as its advantages. The solution here described advantageously facilitates the implementation of smart, low-power, and fully autonomous sensors that, once configured, cyclically execute diagnostic routines on squib or pyro-fuse deployment systems.

As the present solution is capable of operating with very limited intervention from any microcontroller unit or other external intelligence, it advantageously allows designers to save energy while keeping a satisfactory diagnostic reliability. In fact, a microcontroller coupled to the deployment circuit described herein may stay in sleep state waiting for signals originating from the deployment circuit in response to detecting a fault, thus minimizing the SPI traffic thanks to the periodic wake-ups of the MCU.

In other words, the solution described herein advantageously shifts the computational intelligence from the microcontroller to the deployment circuit 105. Further, independently specifying the execution rate for each step of the diagnostics routine increases the flexibility of such solution, and enables to perform less stressing tests at a higher rate, while selecting lower scan rates for high energy and high-power consumption diagnostics.

Moreover, the deployment circuit 105 is capable of automatically signaling any detected fault to the microcontroller 11, while inhibiting further diagnostic steps to prevent misbehavior, thus enabling interrupt-based diagnostic strategies fostering MCU resources.

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. A deployment circuit (105) for controlling the deployment of a pyrotechnic device (30), comprising:
- a positive power supply terminal (PS) and a negative power supply terminal (PG) configured to receive a supply voltage (V_{SUP});
- a first terminal (PF) and a second terminal (PR) configured to be connected to a pyrotechnic device (30);
- a deployment driver circuit (20) configured to energize said pyrotechnic device (30) by connecting (20a, 20b) said first terminal (PF) and said second terminal (PR) to said supply voltage (V_{SUP});
- diagnostic circuitry (160) configured to perform diagnostic controls on the deployment circuit (105);
- a communication interface (SCLK, SDI, SDO, NCS) configured to be connected to a microcontroller (11);
- a terminal configured to be connected to said microcontroller (11) in order to provide a fault signal (FAULT) to said microcontroller (11);
- a control circuit (110) comprising a hardware Finite-State Machine configured to execute one or more diagnostic routines (300, 350, 360, 370), wherein each diagnostic routine (300, 350, 360, 370) comprises a sequence of diagnostic operations (301-307; 351-356; 363-364; 374-375), wherein each diagnostic operation comprises:
- generating control signals for said diagnostic circuitry (160) in order to execute a diagnostic operation of said deployment circuit (105),
- monitoring one or more signals (CS, DS) provided by said diagnostic circuitry (160),
- determining whether said one or more signals (CS, DS) indicate one or more faults of said deployment circuit (105),
- in response to determining that said one or more signals (CS, DS) indicate one or more faults of said deployment circuit (105), asserting said fault signal (FAULT) and store a fault code (ZF) indicative of the fault detected;
wherein said control circuit (110) is configured to receive via said communication interface (SCLK, SDI, SDO, NCS) a request and, in response to said request, transmit said stored fault code (ZF).

2. The deployment circuit (105) of Claim 1, wherein said diagnostic circuitry (160) comprises a voltage regulator and current monitor circuit (500) comprising:
- a voltage source (502) comprising an output terminal for providing a reference voltage (V_{REF});
- a switching circuit (504) configured to connect the output terminal of said voltage source (502) to said first terminal (PF) and said second terminal (PR) as a function of a switching circuit control signal (PX) received from said control circuit (110); and
- a current monitor (506) configured to provide a signal (CS) indicative of the current flowing through the output terminal of said voltage source (502), wherein said signal (CS) is provided to said control circuit (110).

3. The deployment circuit (105) of Claim 2, wherein a first diagnostic operation (304) comprises:
- a respective first phase, wherein said control circuit (110) is configured to:
- generate said switching circuit control signal (PX) in order to connect the output terminal of said voltage source (502) to said first terminal (PF),
- monitor said signal (CS) indicative of the current flowing through the output terminal of said voltage source (502),
- determine whether said signal (CS) indicates a current flow between said first terminal (PF) and the output terminal of said voltage source (502),
- in response to determining that said signal (CS) indicates a current flow between said first terminal (PF) and the output terminal of said voltage source (502), assert said fault signal (FAULT) and store a fault code (ZF) indicative of the leakage condition at said first terminal (PF); and/or
- a respective second phase, wherein said control circuit (110) is configured to:
- generate said switching circuit control signal (PX) in order to connect the output terminal of said voltage source (502) to said second terminal (PR),
- monitor said signal (CS) indicative of the current flowing through the output terminal of said voltage source (502),
- determine whether said signal (CS) indicates a current flow between said second terminal (PR) and the output terminal of said voltage source (502),
- in response to determining that said signal (CS) indicates a current flow between said second terminal (PR) and the output terminal of said voltage source (502), assert said fault signal (FAULT) and store a fault code (ZF) indicative of the leakage condition at said second terminal (PR).

4. The deployment circuit (105) of Claim 2 or Claim 3, wherein said deployment driver circuit (20) comprises:
- a high-side electronic switch (20a) connected between said positive power supply terminal (PS) and said first terminal (PF), wherein said high-side electronic switch (20a) is closed as a function of a high-side switch control signal (HS) received from said control circuit (110);
- a low-side electronic switch (20b) connected between said second terminal (PR) and said negative power supply terminal (PG), wherein said low-side electronic switch (20b) is closed as a function of a low-side switch control signal (LS) received from said control circuit (110);
wherein a second diagnostic operation (306) comprises:
- a respective first phase, wherein said control circuit (110) is configured to:
- generate said switching circuit control signal (PX) in order to connect the output terminal of said voltage source (502) to said first terminal (PF),
- generate said high-side switch control signal (HS) in order to close said high-side electronic switch (20a),
- monitor said signal (CS) indicative of the current flowing through the output terminal of said voltage source (502),
- determine whether said signal (CS) indicates a current flow from said first terminal (PF) to the output terminal of said voltage source (502),
- in response to determining that said signal (CS) does not indicate a current flow from said first terminal (PF) to the output terminal of said voltage source (502), assert said fault signal (FAULT) and store a fault code (ZF) indicative of failure of said high-side electronic switch (20a); and/or
- a respective second phase, wherein said control circuit (110) is configured to:
- generate said switching circuit control signal (PX) in order to connect the output terminal of said voltage source (502) to said second terminal (PR),
- generate said low-side switch control signal (LS) in order to close said low-side electronic switch (20b),
- monitor said signal (CS) indicative of the current flowing through the output terminal of said voltage source (502),
- determine whether said signal (CS) indicates a current flow from the output terminal of said voltage source (502) to said second terminal (PR),
- in response to determining that said signal (CS) does not indicate a current flow from the output terminal of said voltage source (502) to said second terminal (PR), assert said fault signal (FAULT) and store a fault code (ZF) indicative of failure of said low-side electronic switch (20b).

5. The deployment circuit (105) of the previous claims, wherein said diagnostic circuitry (160) comprises:
- a first current limiter (510) connected between said positive power supply terminal (PS) and said first terminal (PF), wherein said first current limiter (510) is enabled as a function of a first enable signal (EN1) received from said control circuit (110); and
- a second current limiter (512) connected between said second terminal (PR) and said negative power supply terminal (PG), wherein said second current limiter (512) is enabled as a function of a second enable signal (EN2) received from said control circuit (110).

6. The deployment circuit (105) according to a combination of Claim 5 and any of Claims 2 to 4, wherein a third diagnostic operation (303) comprises:
- a respective first phase, wherein said control circuit (110) is configured to:
- generate said switching circuit control signal (PX) in order to connect the output terminal of said voltage source (502) to said first terminal (PF),
- generate said first enable signal (EN1) in order to enable said first current limiter (510),
- monitor said signal (CS) indicative of the current flowing through the output terminal of said voltage source (502),
- determine whether said signal (CS) indicates a current flow from said first terminal (PF) to the output terminal of said voltage source (502),
- in response to determining that said signal (CS) does not indicate a current flow from said first terminal (PF) to the output terminal of said voltage source (502), assert said fault signal (FAULT) and store a fault code (ZF) indicative of failure of the operation of said voltage regulator and current monitor circuit (500) and said first current limiter (510); and/or
- a respective second phase, wherein said control circuit (110) is configured to:
- generate said switching circuit control signal (PX) in order to connect the output terminal of said voltage source (502) to said second terminal (PR),
- generate said second enable signal (EN2) in order to enable said second current limiter (512),
- monitor said signal (CS) indicative of the current flowing through the output terminal of said voltage source (502),
- determine whether said signal (CS) indicates a current flow from the output terminal of said voltage source (502) to said second terminal (PR),
- in response to determining that said signal (CS) does not indicate a current flow from the output terminal of said voltage source (502) to said second terminal (PR), assert said fault signal (FAULT) and store a fault code (ZF) indicative of failure of the operation of said voltage regulator and current monitor circuit (500) and said second current limiter (512).

7. The deployment circuit (105) of the previous claims, wherein said deployment circuit (105) comprises:
- an analog-to-digital converter (170) comprising an input, wherein said analog-to-digital converter (170) is configured to provide a signal (DS) indicative of the voltage at the input of the analog-to-digital converter (170); and
- a further switching circuit (S1, S2) configured to connect the input of said analog-to-digital converter (170) to said first terminal (PF) and said second terminal (PR) as a function of a further switching circuit control signal (CTRL).

8. The deployment circuit (105) of Claim 7, wherein said diagnostic circuitry (160) comprises:
- a first voltage source (402) configured to provide a first voltage (VR1);
- a second voltage source (404) configured to provide a second voltage (VR1);
wherein said further switching circuit (S1, S2) is configured to connect the input of said analog-to-digital converter (170) to said first voltage source (402) or said second voltage source (404) as a function of said further switching circuit control signal (CTRL);
wherein a fourth diagnostic operation (302) comprises:
- a respective first phase, wherein said control circuit (110) is configured to:
- generate said further switching circuit control signal (CTRL) in order to disconnect the input of said analog-to-digital converter (170) from said first terminal (PF) and said second terminal (PR), and connect the input of said analog-to-digital converter (170) to said first voltage source (402),
- monitor said signal (DS) indicative of the voltage at the input of the analog-to-digital converter (170),
- determine whether said signal (DS) has a first expected value,
- in response to determining that said signal (DS) does not have said first expected value, assert said fault signal (FAULT) and store a fault code (ZF) indicative of analog-to-digital converter error; and/or
- a respective second phase, wherein said control circuit (110) is configured to:
- generate said further switching circuit control signal (CTRL) in order to disconnect the input of said analog-to-digital converter (170) from said first terminal (PF) and said second terminal (PR), and connect the input of said analog-to-digital converter (170) to said second voltage source (404),
- monitor said signal (DS) indicative of the voltage at the input of the analog-to-digital converter (170),
- determine whether said signal (DS) has a second expected value,
- in response to determining that said signal (DS) does not have said second expected value, assert said fault signal (FAULT) and store a fault code (ZF) indicative of analog-to-digital converter error.

9. The deployment circuit (105) according to a combination of Claims 5 and 7, wherein a fifth diagnostic operation (305) comprises:
- generate said further switching circuit control signal (CTRL) in order to connect the input of said analog-to-digital converter (170) to said first terminal (PF) and said second terminal (PR),
- generate said first enable signal (EN1) in order to enable said first current limiter (510) and generate said second enable signal (EN1) in order to enable said second current limiter (510),
- monitor said signal (DS) indicative of the voltage at the input of the analog-to-digital converter (170),
- determine a value (RM) indicative of the resistance (R_{PYRO}) between said first terminal (PF) and said second terminal (PR) as a function of said signal (DS) indicative of the voltage at the input of the analog-to-digital converter (170),
- determine whether said value (RM) indicative of the resistance (R_{PYRO}) between said first terminal (PF) and said second terminal (PR) is between a first threshold and a second threshold, and
- in response to determining that said value (RM) indicative of the resistance (R_{PYRO}) between said first terminal (PF) and said second terminal (PR) is not between a first threshold and a second threshold, assert said fault signal (FAULT) and store a fault code (ZF) indicative of an error of said pyrotechnic device (30).

10. The deployment circuit (105) of any of the previous claims, wherein the control circuit (110) comprises a memory for storing:
- first data indicating a repetition period for the execution of at least one of said diagnostic routines (300, 350, 360, 370), and/or
- for each diagnostic operation (301-307; 351-356; 363-364; 374-375) second data indicating after how many cycles of a given diagnostic routine (300, 350, 360, 370) the respective diagnostic operation (301-307; 351-356; 363-364; 374-375) should be executed;
wherein said control circuit (110) is configured to execute said one or more diagnostic routines (300, 350, 360, 370) and the respective diagnostic operation (301-307; 351-356; 363-364; 374-375) as a function of said first data and said second data.

11. The deployment circuit (105) of claim 10, wherein said first data and/or said second data are programmable via said communication interface.

12. The deployment circuit (105) of any of the previous claims, wherein the control circuit (110) is implemented with sequential logic circuit.

13. A deployment system (100) for controlling the deployment of a pyrotechnic device (30), comprising:
- a deployment circuit (105) according to any of claims 1 to 12;
- a microcontroller (11) connected to said deployment circuit (105), wherein said microcontroller (11) is configured to:
- received said fault signal (FAULT),
- determine whether said fault signal (FAULT) is asserted,
- in response to determining that said fault signal (FAULT) is asserted, send a request to said deployment circuit (105) in order to receive said stored fault code (ZF).

14. The deployment system (100) of Claim 13, wherein said microcontroller (11) supports a normal operating state and a low-power stage, wherein said microcontroller (11) is configured to:
- send a request to said deployment circuit (105) in order to program:
- first data indicating a repetition period for the execution of at least one of said diagnostic routines (300, 350, 360, 370), and/or
- for each diagnostic operation (301-307; 351-356; 363-364; 374-375) second data indicating after how many cycles of a given diagnostic routine (300, 350, 360, 370) the respective diagnostic operation (301-307; 351-356; 363-364; 374-375) should be executed;
- enable said low-power state, and
- in response to determining that said fault signal (FAULT) is asserted, enable said normal operating state and send said request in order to receive said stored fault code (ZF).

15. A method of operating a deployment circuit (105) according to any of the previous claim 1 to 12, comprising:
- executing via the control circuit (110) of the deployment circuit (105) one or more diagnostic routines (300, 350, 360, 370), wherein each diagnostic routine (300, 350, 360, 370) comprises a sequence of diagnostic operations (301-307; 351-356; 363-364; 374-375), wherein each diagnostic operation comprises:
- generating control signals for said diagnostic circuitry (160) in order to execute a diagnostic operation of said deployment circuit (105),
- monitoring one or more signals (CS, DS) provided by said diagnostic circuitry (160),
- determining whether said one or more signals (CS, DS) indicate one or more faults of said deployment circuit (105),
- in response to determining that said one or more signals (CS, DS) indicate one or more faults of said deployment circuit (105), asserting said fault signal (FAULT) and store a fault code (ZF) indicative of the fault detected;
wherein the method further comprises receiving via the communication interface (SCLK, SDI, SDO, NCS) of the deployment circuit (105) a request and, in response to said request, transmitting said stored fault code (ZF).
